# EUROPEAN PATENT APPLICATION

(11) **EP 3 029 264 A1**
(43) Date of publication of application: **08.06.2016**
(21) Application number: 14196492.4
(22) Date of filing: 05.12.2014
(51) Int. Cl.: E21B 21/07, B01D 46/00

(54) **Separator, rock drilling unit and method for separating drilling waste**

(71) Applicant: Sandvik Mining and Construction Oy, 33330 Tampere (FI)
(72) Inventor: SORMUNEN, Tapani, 33330 Tampere (FI); JUUJÄRVI, Kari, 33330 Tampere (FI)

(57) **Abstract**

The invention relates to separator for separating drilling waste. The invention further relates to a rock drilling unit and method for separating drilling waste material. The separator (12) comprises a coarse separating chamber (21) and a fine separating chamber (23) integrated in one single device. The separating chambers are located successively and the fine separating chamber is located on top of the coarse separating chamber.

## Description

### Background of the invention

The invention relates to a separator for separating drilling waste material produced during rock drilling. The separator comprises separating means for separating air and solid particles of the drilling waste.

The invention further relates a rock drilling unit and to a method for separating drilling waste material.

The field of the invention is defined more specifically in the preambles of the independent claims.

In mines and at other work sites, rock drilling machines are used for drilling bore holes into rock surfaces and soil. In rock drilling, rock is broken with a tool, which generates fine particles like rock dust and coarse particles like drilling cuttings. Rock drilling rigs typically have a dust collecting system with which rock material is sucked away from the borehole and filtered in separate coarse and fine separators. However, the known solutions have shown to contain some disadvantages.

### Brief description of the invention

An object of the invention is to provide a novel and improved drilling waste separator and a rock drilling unit provided with the separator. A further object is to provide a novel and improved method for separating drilling waste material.

The drilling waste separator according to the invention is characterized in that the separator comprises a coarse separating chamber provided with coarse separating means, and a fine separating chamber provided with fine separating means; the fine separating chamber is located above the coarse separating chamber; and the fine separating chamber is in connection to at least one suction source for generating negative pressure inside at least the fine separating chamber during the operation of the separator.

The rock drilling unit according to the invention is characterized in the drilling waste collection arrangement comprises one single separator, which is in accordance with independent claim 1 and is located in the rock drilling unit.

The method according to the invention is characterized by utilizing in the separation one single integrated separator being located in a rock drilling unit and provided with a coarse separating chamber and a fine separating chamber, which is located above the coarse separating chamber; separating coarse particles of the drilling waste material in a cyclone provided in the coarse separating chamber; conveying fine particles through an open inner portion of the cyclone to the fine separating chamber under influence of negative pressure prevailing in the fine separating chamber; and separating the fine particles in at least one filter element provided in the fine separating chamber.

An idea of the disclosed solution is that the separator comprises a coarse separating unit and a fine separating unit, which are integrated to form one single operable and physical entity or device. The coarse separating unit comprises a coarse separating chamber and the fine separating unit comprises a fine separating chamber. The separating units are arranged successively and one on the other so that the fine separating chamber is located above the coarse separating chamber. In other words, the fine separating unit is located at a first end side of the coarse separating unit opposite to a discharge part being located at the second end of the coarse separating unit. Further, a negative pressure prevails inside the fine separating chamber during the operation of the separator. The fine separating unit is connected to a suction source for generating the negative pressure needed in a fine separating phase.

An advantage of the disclosed solution is that one single integrated separator is capable of separating coarse drilling cuttings and particles as well as drilling dust and fine particles. Therefore, a need for a separate coarse separator and a fine separator no longer exists. The structure of the disclosed separator is compact, which facilitates mounting of the separator. Less space is needed for the disclosed integrated separator compared to conventional systems provided with two or more separate separating units. A further advantage is that pressure losses may be substantially lower in the integrated structure as compared to conventional systems. Thanks to the decreased pressure losses, the separating capacity may be improved and size of the separator may be decreased. Additionally, energy consumption of the drilling waste collection system may be reduced.

According to an embodiment, the separator is mounted to a rock drilling unit. Thereby, the integrated separator provided with the coarse separating unit and the fine separating unit is close to a drill hole being drilled and transport length of the collected drilling waste material may be short. Since the distance between the separator and the drill hole opening is short, pressure losses may be decreased. Further, length of a feed hose between the integrated separator and a suction housing or funnel positioned during drilling on the drill hole opening may also be short, whereby weight of the separating system may be decreased and support elements of the feed hose may be simplified.

According to an embodiment, the separator is mounted to a rock drilling unit provided with an elongated feed beam comprising a longitudinal axis. The separator may be arranged so that middle axis of the separator is parallel or at least substantially parallel with longitudinal axis of the feed beam. This way the separator takes space in a lateral direction as little as possible and does not hamper positioning of the rock drilling unit. Configuration of the integrated separator may be relatively long and slender.

According to an embodiment, the fine separating chamber and the coarse separating chamber both comprise airtight outer casings. The outer casings limit inner spaces of the chambers.

According to an embodiment, the fine separating chamber and the coarse separating chamber both comprise longitudinal outer casings having circular cross sections. The longitudinal outer casings of the separating chambers are arranged successively so that middle axis of the casings is on a same line. At the lowermost part of casings may be funnel portions, whereby a bottom part of the outer casing of the fine separating chamber narrows towards the coarse chamber and a bottom part of the coarse chamber narrows towards the discharging end.

According to an embodiment, the separator is provided with only one single port or corresponding connecting element for connecting a drilling waste hose to the separator. The single drilling waste hose is a feed hose connected to a feed opening for feeding the drilling waste material to the coarse separating chamber. Thus, the integrated separator is not provided with any discharge or transfer hose outside the separating chambers and serving as a flow path away from the coarse or fine separating chambers.

According to an embodiment, between the fine separating chamber and the coarse separating chamber is a central hollow channel for interconnecting the chambers. The fine separating chamber may be in connection to the coarse separating chamber only through the central channel. The central interconnecting channel is void, whereby it is without any additional elements causing resistance of flow.

According to an embodiment, the coarse separating chamber may comprise a cyclone provided with a central tubular inner element. The inner element of the cyclone serves as a connecting hollow channel between the two separating chambers of the separator. The tubular inner element of the cyclone serves as a flow path during separating process, when air and fine particles are sucked from the coarse separating chamber to the fine separating chamber. In addition to, the tubular inner element of the cyclone may serve as a flow path allowing captured fine particles to be dropped to a discharge part of the coarse separating unit when filtering means of the fine separating unit are cleaned by removing fine particles accumulated on the filtering means.

According to an embodiment, an upper portion of the coarse separating chamber comprises a cyclone, which is provided with a central tubular inner element extending a distance towards a bottom of the coarse separating chamber. Thus, between an outer surface of the inner element and an inner surface of the coarse separating chamber is an annular space, which is provided with an open lower end and closed upper end. A feed opening is located at the cyclone in order to feed the flow of the drilling waste material to the cyclone for causing the material to rotate in the annular space of the cyclone in order to separate coarse and fine particles. The coarse particles drop towards the bottom of the coarse chamber comprising a discharge part and the fine particles and air is sucked through the inner element of the cyclone to the fine separating chamber wherein the fine particles are separated from the air by means of one or more filter elements.

According to an embodiment, the fine separating chamber comprises one or more filter elements, which are located at an upper portion of the fine separating chamber. The filter element extends a distance towards the coarse separating chamber. A suction source is configured to produce negative pressure inside the filter element during the use of the separator, whereby fine particles of the drilling waste are being retained on an outer surface of the filter element and air is allowed to flow through the filter element and exit from the fine separating chamber to ambient air. Outer surface of the filter element serves as filter media for separating fine particles and air.

According to an embodiment, the fine separating chamber comprises several filter elements. Number of the filter elements is at least 6. Typically, the number of the filter elements may be between 6 and 9.

According to an embodiment, the suction source is arranged in connection to the fine separating chamber. The suction source may be located in connection with the separator, or alternatively, it may be external to the separator and may then be connected by means of a suction channel or hose to the fine separating chamber.

According to an embodiment, the suction source is a blower, which is located at a top of the fine separating chamber. The blower may comprise several blades, which may be rotated around rotational axis by means of a hydraulic motor, for example.

According to an embodiment, the blower comprises several blades, which are rotated around rotational axis parallel to vertical axis of the separator. Configuration of the blower may be flat, which facilitates mounting of the blower on top part of the fine separating chamber. A diameter of the blower may correspond to an inner diameter of the upper portion of the fine separating chamber thereby allowing effective suction to be generated by means of the blower, despite of the flat and compact structure.

According to an embodiment, the fine separating chamber comprises at least one filter element for separating fine particles and air. Further, the fine separating chamber is provided with at least one cleaning device for generating a pressure pulse inside the filter element for detaching fine particles accumulated on the outer surface of the filter element. The fine particles detached from the filter element are configured to be dropped towards a bottom of the fine separating chamber and further through an interconnecting central channel to a discharge part located at a bottom of the coarse separating chamber. Thus, the integrated separator is provided with one single discharge part for the discharge of both coarse and fine particles.

According to an embodiment, the separated drilling waste material is discharged during the separation process of the drilling waste material without accumulating the drilling waste material to the separator. Thus, the separator is not provided with any drilling waste bag, reservoir or corresponding accumulating unit.

According to an embodiment, the discharge part is provided with a discharging device, which is located at the bottom of the coarse separating unit. The discharge device is configured to be operable during the operation of the separator, whereby the separated drilling waste material may be continuously discharged without accumulating the material in the coarse separating unit. An advantage of this solution is that the separated drilling waste material does not increase weight of the separator.

According to an embodiment, the discharging device of the separator is a displacement feeder, which is configured to discharge the drilling material in batches from the separator. The displacement feeder may compact the separated rock material during the discharge process, whereby the discharged material may be compressed and discharged from the separator in cake-like pieces. The displacement feeder may comprise rotating blades between which compression spaces are formed or it may comprise a slide arranged to compress and discharge the separated material.

According to an embodiment, the separator is intended to be mounted to a rock drilling unit. Therefore, the frame of the separator may comprise one or more fastening elements for fastening the separator to the rock drilling unit. The separator may be fastened to a cradle, which is located between a feed beam of the rock drilling unit and a boom of a rock drilling rig.

According to an embodiment, the disclosed separator is intended to be used in a surface rock drilling unit, which is positioned substantially vertically during drilling.

The above-disclosed embodiments may be combined to form suitable solutions provided with necessary features disclosed.

### Brief description of the figures

Some embodiments are described in more detail in the accompanying drawings, in which
Figure 1 is a schematic side view of a rock-drilling rig equipped with a drilling waste collection system,
Figure 2 is a schematic and partly sectional view of a separator comprising a fine separating unit and a coarse separating unit integrated into one single device, and
Figure 3 is a schematic view of the integrated separator shown in Figure 2 and along section A-A.

For the sake of clarity, the figures show some embodiments of the disclosed solution in a simplified manner. In the figures, like reference numerals identify like elements.

### Detailed description of some embodiments

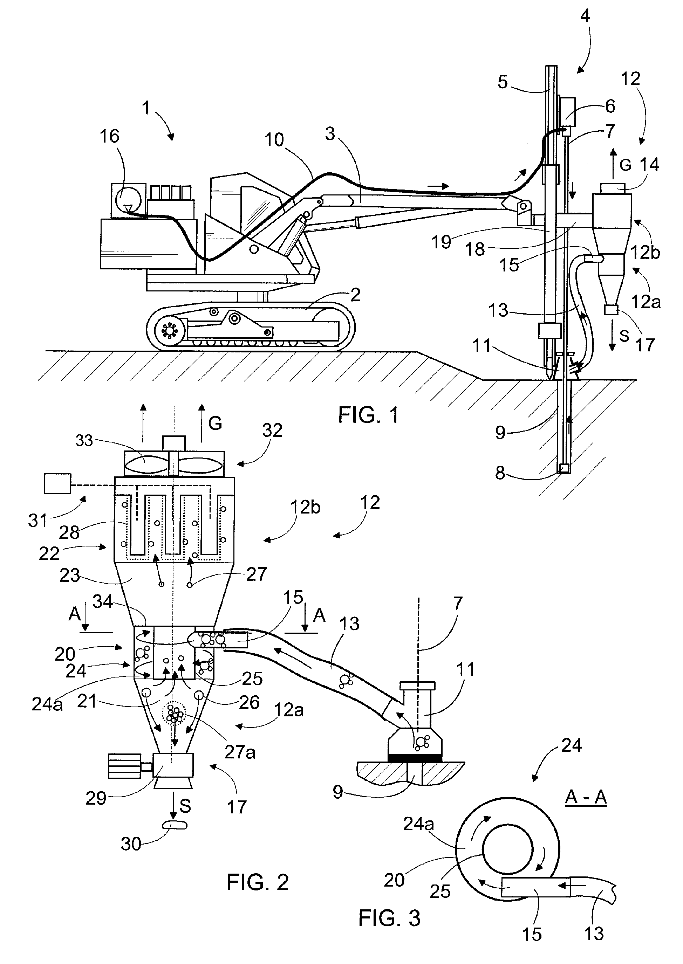

The rock-drilling rig 1 shown in Figure 1 comprises a movable carrier 2 that may have one or more movable drilling booms 3 arranged to it. The drilling boom 3 may have a rock drilling unit 4 with at least a feed beam 5 and a rock drill machine 6. The rock drill machine 6 is supported to the feed beam 5 and may be moved during drilling, while a percussion device belonging to the rock drill machine 6 provides impact pulses to a tool 7. A drill bit 8 at the outermost end of the tool 7 then breaks rock and the tool 7 penetrates the rock. During drilling, drilling waste, i.e. broken rock material comprising drilling cuttings and rock dust, is formed. The drilling waste material may be removed from a borehole 9 by feeding from a flushing medium channel 10 air, a mixture of air and water, or some other flushing medium through the tool 7 to the drill bit 8. The flushing medium pushes the drilling waste material toward an opening of the borehole 9, from which it can be removed with a drilling waste collection system belonging to the rock-drilling rig 1.

The collection system may comprise a suction housing 11 or funnel arranged during drilling at the opening of the borehole 9, a separator 12 arranged in connection with the rock drilling unit 4, and a feed hose 13 between the suction housing 11 and the separator 12. The separator 12 may comprise a suction device 14 with which negative pressure may be formed inside the separator 12. The drilling waste material may be moved along the feed hose 13 from the suction housing 11 to a feed opening 15 of the separator 12 under influence of the pressure of the flushing medium and the negative pressure prevailing inside the separator 12. The flushing medium may be pressurized by means of a compressor 16. The separator 12 comprises a coarse separating unit 12a and a fine separating unit 12b, which means that both coarse particles and fine particles may be separated by means of one integrated device. The fine separating unit 12b is located on top of the coarse separating unit 12a. At a bottom of the coarse separating unit 12a is a discharge part 17 for discharging the separated drilling waste material from the separator 12. The separated solid material S may be eventually dropped on the ground. Air flow G may be released after filtering to the ambient air. Further, in Figure 1 arrows are presented for demonstrating flows of the flushing medium and drilling waste material.

The integrated separator 12 requires only a relatively small space, whereby it may be mounted to the rock drilling unit 4 by means of a fastening element 18 or support. The fastening element 18 may be connected to a cradle 19 of the rock drilling unit 4. Since the separator 12 is located in the rock drilling unit 4 close to the drill hole, length of the feed hose 13 may be short. Furthermore, the separator may be without any other hoses because the separating units are arranged in one compact device.

Figure 2 shows a separator 12 with a combined coarse separating unit 12a and fine separating unit 12b. The coarse separating unit 12a comprises a casing 20 inside which is a coarse separating chamber 21, and correspondingly the fine separating unit 12b comprises a casing 22 inside which is a fine separating chamber 23. The casings 20 and 22 are impermeable to air and they may form together a frame for the separator 12. The drilling waste material to be separated may be brought along the feed hose 13 to the feed opening 15 of the coarse separating unit 12a, from which it can be led substantially tangentially to a cyclone 24, that may comprise an annular space 24a between an inner surface of the casing 20 and a tubular inner element 25 at the top of the coarse separating unit 12a. The centrifugal force affecting the coarse particles 26 is greater than that affecting the fine particles 27, whereby the coarse particles 26 hits the inner surface of the casing 20 and then drops into the discharging part 17. A lower end of the inner element 25 is open, whereby the fine particles 27 may in turn be sucked inside the tubular inner element 25 and led to the fine separating chamber 23. The fine separating chamber 23 is provided with one or more filter elements 28 that allow air to flow through, but retains solid matter. Between the separating units 12, 12b is at least one intermediate wall 34 for closing an upper end of the annular space 24a of the cyclone 24.

At the bottom of the coarse separating unit 12a there may be a discharging device 29 by means of which the separated material may be moved out of the separator 12. The discharging device 29 may be continuously operable during the operation of the separator 12. The discharging device 29 may be a displacement feeder and it may be arranged to compress the separated material into cake-like solid pieces 30.

The fine particles 27 attached to the surface of the filter element 28 may be detached by providing with a cleaning device 31 to the inside of the filter element 28 a pressure pulse that makes the fine particles 27a drop through the tubular inner element 25 to the coarse separating chamber 21 and finally end up to the discharging part 17. Compressed air may be led to the cleaning device 31 from the compressor 16 shown in Figure 1.

The air passing through the filter element 28 is released into the ambient air. The suction flow required by the separator 12 may be generated with one or more blowers 32 that may be arranged on top of the fine separating chamber 23. The blower 32 may comprise blades 33, which may be rotated around a rotational axis being parallel to longitudinal axis of the separator 12.

Figure 3 shows a cut at A-A of the dust separator 12 of Figure 2. In Figure 3, arrows illustrate filtering flows in the cyclone 24 of the coarse separating unit 12a. As can be seen, the inner tubular element 25 of the cyclone is hollow and it defines a void space serving as a flow path between the separating chambers of the separator.

The drawings and the related description are only intended to illustrate the idea of the invention. In its details, the invention may vary within the scope of the claims.

## Claims

1. A drilling waste separator comprising:
at least one frame part forming a casing around the separator (12);
at least one separating chamber within the frame;
at least one feed opening (15) allowing a feed flow comprising drilling waste particles and air to be fed into the at least one separating chamber;
separating means for processing the fed flow in order to separate the drilling waste particles and air; and
a discharge part (17) for discharging the separated drilling waste particles from the separator (12);
**characterized in that**
the separator (12) comprises a coarse separating chamber (21) provided with coarse separating means, and a fine separating chamber (23) provided with fine separating means;
the fine separating chamber (23) is located above the coarse separating chamber (21); and
the fine separating chamber (23) is in connection to at least one suction source for generating negative pressure inside at least the fine separating chamber (23) during the operation of the separator (12).

2. The separator as claimed in claim 1, **characterized in that** between the fine separating chamber (23) and the coarse separating chamber (21) is a central hollow channel for interconnecting the chambers.

3. The separator as claimed in claim 1 or 2, **characterized in that**
an upper portion of the coarse separating chamber (21) comprises a cyclone (24), which is provided with a central tubular inner element (25) serving as an interconnecting channel between the chambers.

4. The separator as claimed in claim 2 or 3, **characterized in that**
an upper portion of the coarse separating chamber (21) comprises a cyclone (24), which is provided with a central tubular inner element (25) extending a distance towards a bottom of the coarse separating chamber (21), whereby between an outer surface of the inner element (25) and an inner surface of the coarse separating chamber (21) is an annular space (24a), which is provided with an open lower end and closed upper end;
the feed opening (15) is lateral and is located at the cyclone (24) in order to feed the flow of the drilling waste material to the cyclone (24) for causing the material to rotate in the annular space (24a) of the cyclone in order to separate coarse and fine particles (26, 27);
the fine separating chamber (23) is in connection to the coarse separating chamber (21) through the inner element (25) of the cyclone (24); and
the fine separating chamber (21) comprises at least one filter element (28) for separating the fine particles (25) and air.

5. The separator as claimed in any one of the preceding claims 1 to 4, **characterized in that**
the fine separating chamber (23) comprises at least one filter element (28), which is located at an upper portion of the fine separating chamber (23) and the filter element (28) extends towards a bottom of the fine separating chamber (23); and
the suction source is configured to produce negative pressure inside the filter element (28) during the use of the separator (12), whereby fine particles (27) of the drilling waste are being retained on an outer surface of the filter element (28) and air is allowed to flow through the filter element (28) and exit from the fine separating chamber (23) to ambient air.

6. The separator as claimed in any one of the preceding claims 1 to 5, **characterized in that**
the suction source is a blower (32), which is located at a top of the fine separating chamber (23).

7. The separator as claimed in claim 6, **characterized in that**
the blower (32) comprises several blades (33), which are rotated around rotational axis parallel to longitudinal axis of the separator (12).

8. The separator as claimed in any one of the preceding claims 1 to 7, **characterized in that**
the fine separating chamber (23) comprises at least one filter element (28) for separating fine particles (27) and air;
the fine separating chamber (23) is provided with at one cleaning device (31) for generating a pressure pulse inside the filter element (28) for detaching fine particles (27) accumulated on the outer surface of the filter element (28); and
the fine particles (27a) detached from the filter element (28) are configured to be dropped towards a bottom of the fine separating chamber and further through an interconnecting channel to the discharge part (17) located at a bottom of the coarse separating chamber (21), whereby the separator (12) is provided with one single discharge part (17) for the discharge of both coarse and fine particles (26, 27).

9. The separator as claimed in any one of the preceding claims 1 to 8, **characterized in that**
the discharge part (17) is provided with a discharging device (29), which is located at the bottom of the coarse separating chamber (23); and
the discharge device (29) is configured to be operable during the operation of the separator (12).

10. The separator as claimed in claim 9, **characterized in that**
the discharging device (29) of the separator (12) is a displacement feeder, which is configured to discharge the separated drilling waste material in batches from the separator (12).

11. The separator as claimed in any one of the preceding claims 1 to 10, **characterized in that**
the frame of the separator comprises at least one fastening element (18) for fastening the separator (12) to a rock drilling unit (4).

12. A rock drilling unit, comprising:
a feed beam (7);
a rock drilling machine (6) arranged movably on the feed beam (7); and
a drilling waste collection arrangement comprising at least a suction housing (11) and at least one suction channel for transporting the drilling waste formed during drilling from the suction housing (11) to at least one separator (12);
**characterized in that**
the drilling waste collection arrangement comprises one single separator (12), which is in accordance with any one of the preceding claims 1 to 11 and is located in the rock drilling unit (4).

13. Method for separating drilling waste material, the method comprising:
sucking drilling waste material from a borehole (9);
conveying the drilling waste material to at least one separator (12);
separating with the at least one separator (12) solid particles (26, 27) and air from the sucked drilling waste material; and
discharging the separated solid particles (26, 27) and air from the separator (12);
**characterized by**
utilizing in the separation one single integrated separator (12) being located in a rock drilling unit (4) and provided with a coarse separating chamber (21) and a fine separating chamber (23), which is located above the coarse separating chamber (21);
separating coarse particles (26) of the drilling waste material in a cyclone (24) provided in the coarse separating chamber (21);
conveying fine particles (27) through an open inner portion of the cyclone (24) to the fine separating chamber (23) under influence of negative pressure prevailing in the fine separating chamber (23); and
separating the fine particles (27) in at least one filter element (28) provided in the fine separating chamber (23).
